Europäisches Patentamt

European Patent Office

Office européen des brevets

(11) Veröffentlichungsnummer : **0 050 836**
**B1**

# EUROPÄISCHE PATENTSCHRIFT

(45) Veröffentlichungstag der Patentschrift :
28.08.85

(21) Anmeldenummer : 81108683.4

(22) Anmeldetag : 22.10.81

(51) Int. Cl.⁴ : **G 21 C   3/30**, G 21 C 15/06

(54) **Brennelementbündel für Kernreaktor.**

(30) Priorität : 29.10.80 SE 8007592

(43) Veröffentlichungstag der Anmeldung :
05.05.82 Patentblatt 82/18

(45) Bekanntmachung des Hinweises auf die Patenterteilung : 28.08.85 Patentblatt 85/35

(84) Benannte Vertragsstaaten :
BE CH DE FR GB IT LI NL

(56) Entgegenhaltungen :
DD-A-    47 659
DE-A- 1 414 844
DE-A- 1 564 994
DE-A- 2 746 555

(73) Patentinhaber : AB ASEA-ATOM
S-721 83 Västeras (SE)

(72) Erfinder : Nylund, Olov, Dipl.-Ing.
Ragnaröksgatan 17
S-720 17 Västeräs (SE)
Erfinder : Schölin, Bertil
Bysägsgatan 10
S-724 81 Västeräs (SE)

(74) Vertreter : Boecker, Joachim, Dr.-Ing.
Rathenauplatz 2-8
D-6000 Frankfurt a.M. 1 (DE)

## Beschreibung

Die vorliegende Erfindung betrifft ein Brennelementbündel für einen Siedewasserreaktor gemäß Anspruch 1.

Wenn man ein Brennelementbündel in Siedewasserreaktoren verwenden möchte, die ursprünglich für Brennelementbündel ohne einen zentralen Wasserkanal vorgesehen waren, und wenn diese Verwendung ohne wesentliche Änderung der übrigen Bauteile des Siedewasserreaktors erfolgen soll, dann besteht ein Problem darin, den erforderlichen « by-pass »-Fluß durch den/die zentralen Wasserkanal (-kanäle) zu erreichen, wenn die Reaktorleistung durch Herabsetzung der Drehzahl der Zirkulationspumpen verringert wird.

Der Erfindung liegt die Aufgabe zugrunde, ein Brennelementbündel zu entwicklen, bei dem der auf die genannten vertikalen Wasserkanäle verteilte Anteil des insgesamt erhaltenen « by-pass »-Flusses der Leistungszufuhr zu diesem vertikalen Wasserkanal in allen Betriebssituationen automatisch angepaßt wird.

Zur Lösung dieser Aufgabe wird ein Brennelementbündel nach dem Anspruch 1 vorgeschlagen.

In der älteren EP-A-81101621.1 (Veröffentlichungsnummer 0 036 142) wird ein Brennelementbündel beschrieben, bei welchem die vertikalen Wasserkanäle an ihrem unteren Ende in ein kreuzförmiges Wasserverteilungsorgan münden, welches mit im wesentlichen radial verlaufenden, an der äußeren Seitenwand des Brennelementbündel mündenden Kanälen hydraulisch verbunden ist. Der an das Übergangsstück grenzende Boden des Wasserverteilungsorgans ist dabei mit Einlauföffnungen versehen, die eine direkte hydraulische Verbindung zwischen dem Wasserverteilungsorgan und dem von Übergangsstück umschlossenen Raum herstellen. Die Seitenwand des Übergangsstückes weist keine Durchtrittsöffnungen für Reaktorkühlmittel auf.

Eine vorteilhafte Weiterbildung der Erfindung ist in dem Unteranspruch genannt.

Ein Brennelementbündel nach der Erfindung wird auf konventionelle Weise in einem Reaktorkern angeordnet mit vier Brennelementbündeln in jedem Kernmodul, mit Wasserspalten zwischen benachbarten Bündeln und mit einem im Querschnitt kreuzförmigen Steuerstab in jedem Modul. Neben dem an den Brennstäben entlangströmenden und in Kontakt mit den Brennstäben stehenden Wasserfluß wird der Reaktorkern von einem ersten « by-pass »-Fluß, der auf die genannten, zwischen den Brennelementbündeln gebildeten Spalten lokalisiert ist, und einem zweiten « by-pass »-Fluß, der auf die genannten vertikalen Wasserkanäle lokalisiert ist, durchströmt.

Anhand des in den Figuren gezeigten Ausführungsbeispieles soll die Erfindung näher erläutert werden. Es zeigen

Figur 1 ein Ausführungsbeispiel der Erfindung im Vertikalschnitt längs der Linie I-I in Figur 2 und 3,

Figur 2 einen Horizontalschnitt des Ausführungsbeispieles längs der Linie II-II,

Figur 3 einen Horizontalschnitt des Ausführungsbeispieles längs der Linie III-III in Figur 1,

Figur 4 einen partiellen Vertikalschnitt längs der Linie IV-IV in Figur 2.

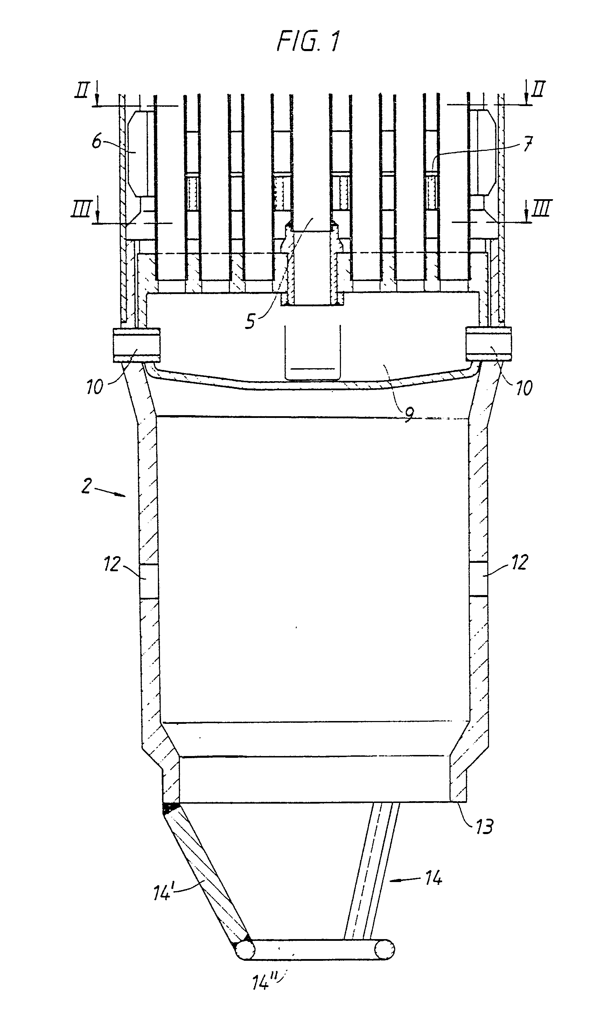

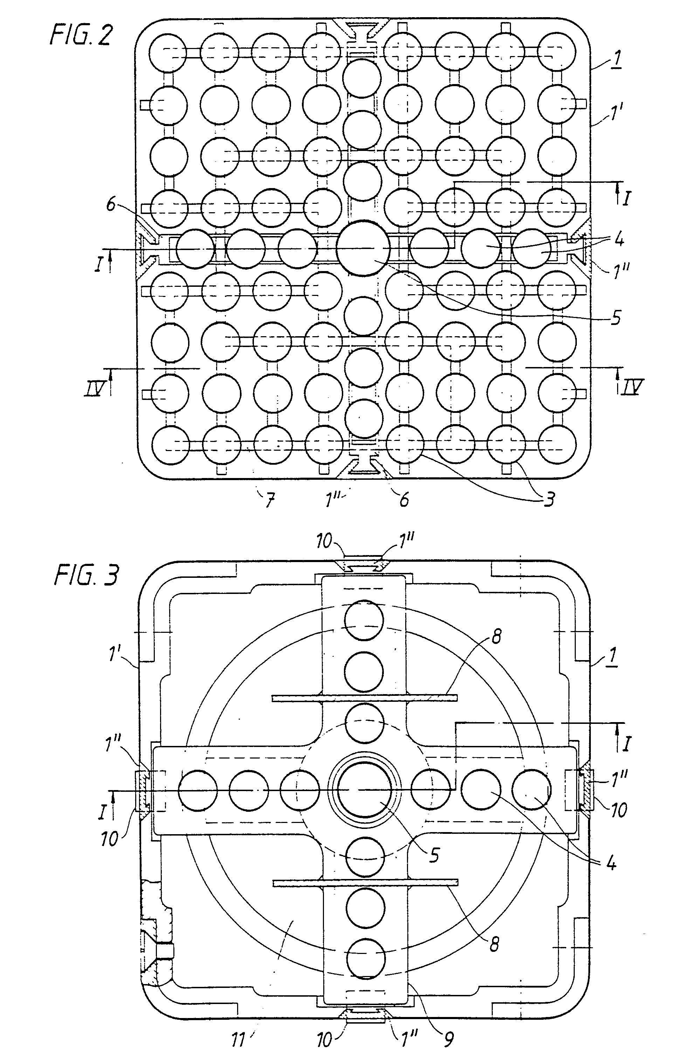

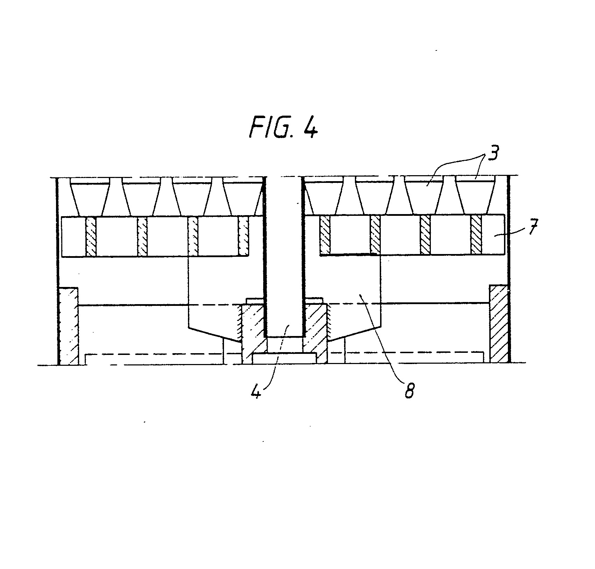

In den Figuren 1, 2, 3 und 4 bezeichnet 1 einen Brennstoffkanal, der an einem hülsenförmigen Übergangsstück 2 befestigt ist. Der Brennstoffkanal 1, der aus vier untereinander gleichen winkelförmigen Blechelementen 1' zusammengesetzt ist, die durch vier vertikale Leisten 1'' miteinander verbunden sind, umhüllt vierundsechzig Brennstäbe 3 sowie zwölf kleinere Wasserrohre 4 und ein größeres, zentrales Wasserrohr 5. Jedes Wasserrohr 4, 5 bildet einen an den Brennstäben entlang verlaufenden vertikalen Kanal für einen an den Brennstäben entlangströmenden, jedoch von diesen abgegrenzten Wasserfluß. Die Wasserrohre sind mittels mehrerer länglicher Verbindungsorgane 6, die mit ihren Enden an den Leisten 1'' befestigt sind, mechanisch miteinander verbunden. Die Brennstäbe 3 ruhen mit ihren unteren Enden auf einem unteren Gitter 7, das auf zwei vertikalen Tragplatten 8 ruht, welche an einem hohlen kreuzförmigen, von dem Übergangsstück getragenen Verteilungsorgan 9 festgeschweißt sind, das mit Anschlußöffnungen für die Wasserrohre 4 und 5 versehen ist. Die Anschlußöffnungen haben innere ringförmige Tragschultern, auf denen die Wasserrohre 4 und 5 mit ihren unteren Stirnflächen ruhen. Das Wasserverteilungsorgan 9 ist mit beispielsweise vier, aber mindestens einem im wesentlichen radialen Rohr 10 versehen, durch welches der vom Verteilungsorgan 9 umschlossene Raum mit dem radial außerhalb des Übergangsstückes 2 befindlichen Raum in Verbindung steht. Das Brennelementbündel hat eine kreisförmige nach unten gerichtete Einlauföffnung, die von einer im wesentlichen ringförmigen Endfläche 13 des hülsenförmigen Übergangsstückes 2 umgeben ist. Unterhalb des hülsenförmigen Übergangsstückes 2 ist ein Steuerorgan 14, das aus einem Ring 14'' und mehreren daran befestigten Stäben 14' besteht, angeordnet. Das gezeigte Brennelementbündel wird zusammen mit drei gleichen Brennelementbündeln von einer gemeinsamen für vier Brennelementbündel vorgesehenen Tragplatte getragen, die mit einer konischen Tragfläche und einer kreisförmigen Drosselöffnung für jedes Brennelementbündel versehen ist. Unterhalb der radialen Rohre 10 und unterhalb des Wasserverteilungsorgans 9 ist in der Wand des Übergangsstückes mindestens ein durchgehendes Loch 12 vorhanden.

Bei einer solchen Dimensionierung der Flußwege des beschriebenen Brennelementbündels, daß ein optimaler « by-pass »-Fluß durch die Wasserrohre 4 und 5 bei voller Reaktorleistung erzielt wird, kann nicht vermieden werden, daß in den Wasserrohren 4 und 5 in gewissem Maße ein Sieden stattfindet, wenn die Reaktorleistung durch Herabsetzung der Drehzahl der Zirkulationspumpen auf ein Minimum gesenkt wird. Ein solches Sieden verursacht in gewissem Maße eine Hohlraumbildung im oberen Teil der Wasserrohre, was bedeutet, daß der Druck im Wasserverteilungsorgan 9 erheblich abnimmt, wobei Wasser durch die Kanäle 10 aus den zwischen den Brennelementbündeln vorhandenen Spalten einströmt. Bereits bei einer akzeptablen Hohlraumbildung wird die entsprechende Zunahme des Wasserflusses durch die radialen Kanäle 10 so groß, daß sich ein Gleichgewichtszustand einstellt.

**Patentansprüche**

1. Brennelementbündel für einen Siedewasserreaktor mit einer unteren Gitteranordnung, die eine Vielzahl von Brennstäben (3) trägt, mit einem Brennstoffkanal (1), der sämtliche Brennstäbe umgibt, mit einem Übergangsstück (2), das eine nach unten gerichtete Einlauföffnung (11) für Reaktorkühlmittel hat, mit mindestens einem vertikalen Wasserkanal (4, 5) für einen in Längsrichtung der Brennstäbe verlaufenden gegen die Brennstäbe abgegrenzten Wasserfluß, welcher Wasserkanal (4, 5) an seinem unteren Ende mit mindestens einem im wesentlichen radial verlaufenden, an der äußeren Seitenwand des Brennelementbündels mündenden Kanal (10) hydraulisch verbunden ist und keine direkte hydraulische Verbindung mit dem vom Übergangsstück umschlossenen Raum hat, und mit mindestens einem in der Wand des Übergangsstücks vorhandenen durchgehenden Loch (12), welches tiefer als die Mündungsöffnung der im wesentlichen radialen Kanäle (10) liegt und welches über einen von dem Übergangsstück (2) umschlossenen Raum in hydraulischer Verbindung mit der Einlauföffnung (11) steht.

2. Brennelementbündel nach Anspruch 1, dadurch gekennzeichnet, daß das Brennelementbündel mehrere Wasserkanäle in Form mehrerer vertikaler Wasserrohre (4, 5) hat, die in zwei Reihen angeordnet sind, die sich in der vertikalen Mittellinie des Brennelementbündels kreuzen, daß die unteren Enden der genannten Wasserrohre (4, 5) von einem von dem genannten Übergangsstück getragenen kreuzförmigen, hohlen Wasserverteilungsorgan (9) getragen werden und in dieses einmünden, daß das Wasserverteilungsorgan (9) keine direkte hydraulische Verbindung mit dem von Übergangsstück (2) umschlossenen Raum hat und daß die radial verlaufenden Kanäle (10) von dem Wasserverteilungsorgan (9) ausgehen.

**Claims**

1. Fuel assembly for a boiling water reactor with a lower lattice device supporting a plurality of fuel rods, with a fuel channel (1) surrounding all the fuel rods, with a transition member (2) provided with a downwardly-facing inlet opening (11) for reactor coolant, with at least one vertical water channel (4, 5) for a water flow in the longitudinal direction of the fuel rods, which water flow is separated from the fuel rods, whereby said water channel (4, 5) is hydraulically connected at its lower end to at least one substantially radially extending channel (10) opening out at the outer side wall of the fuel assembly, and whereby said water channel (4, 5) has no direct hydraulic connection with the space surrounded by the transition member, and with at least one through-hole (12) being positioned lower than the outlet opening of said substantially radial channels and being hydraulically connected with said inlet opening (11) via a space surrounded by said transition member (2).

2. Fuel assembly according to claim 1, characterized in that the fuel assembly has a plurality of water channels in the form of a plurality of vertical water tubes (4, 5), which are arranged in two rows intersecting each other in the vertical center line of the fuel assembly, that the lower ends of said water tubes (4, 5) are supported by and opening out into a cruciform hollow water distribution member (9) supported by said transition member, that the water distribution member (9) has no direct hydraulic connection with the space surrounded by the transition member (2), and that said radially extending channels (10) extend from the water distribution member (9).

**Revendications**

1. Assemblage combustible pour un réacteur à eau bouillante comportant un dispositif inférieur à grille qui porte une multiplicité de crayons de combustible (3), un conduit (1) pour le combustible, qui entoure l'ensemble des crayons de combustible, un organe de jonction (2) qui comporte un orifice d'admission (11) dirigé vers le bas et est prévu pour le fluide réfrigérant du réacteur, au moins un conduit vertical de circulation d'eau (4, 5) pour une circulation d'eau s'étendant suivant la direction des crayons de combustible et limitée par ces dernières, lequel conduit de circulation d'eau (4, 5) est relié par voie hydraulique, à son extrémité inférieure, à au moins un canal (10) essentiellement radial, débouchant dans la paroi latérale extérieure de l'assemblage combustible, et ne comporte aucune liaison hydraulique directe avec l'espace entouré par l'organe de jonction, et comportant au moins un trou traversant (12) ménagé dans la paroi de l'organe de jonction et qui est situé plus bas que l'embouchure des canaux essentiellement radiaux (10) et qui est relié selon une liaison hydraulique à l'orifice d'admission (11) par l'intermédiaire d'un espace entouré par l'organe de jonction (2).

2. Assemblage combustible suivant la revendication 1, caractérisé par le fait que l'assemblage combustible possède plusieurs conduits de circulation d'eau réalisés sous la forme de plusieurs tubes verticaux de circulation d'eau (4, 5), qui sont disposés suivant deux rangées qui s'intersectent au niveau de l'axe médian vertical de l'assemblage combustible, que les extrémités inférieures desdits tubes de circulation d'eau (4, 5) sont portés par un organe creux en forme de croix (9) de répartition de l'eau, porté par ledit organe de jonction, et débouchent dans cet organe de répartition de l'eau, que l'organe (9) de répartition de l'eau n'a aucune liaison hydraulique directe avec l'espace entouré par l'organe de jonction (2) et que les canaux radiaux (10) partent de l'organe (9) de répartition de l'eau.

FIG. 1

**FIG. 2**

**FIG. 3**

*FIG. 4*